# EUROPEAN PATENT APPLICATION

(11) **EP 4 607 758 A1**
(43) Date of publication of application: **27.08.2025**
(21) Application number: 23878858.2
(22) Date of filing: 08.09.2023
(51) Int. Cl.: H02K 1/20

(54) **AXIAL FLUX MOTOR STATOR COOLING STRUCTURE AND AXIAL FLUX MOTOR**

(30) Priority: 21.10.2022 CN 202211298966; 21.10.2022 CN 202211298910
(71) Applicant: Shanghai Pangood Power Technology Co., Ltd., Shanghai 201615 (CN)
(72) Inventor: TANG, Lei, Shanghai 201615 (CN); CHEN, Jinhua, Shanghai 201615 (CN); XU, Dianyou, Shanghai 201615 (CN); ZHANG, Guangquan, Shanghai 201615 (CN)
(74) Representative: advotec.
(86) International application number: PCT/CN2023/117706
(87) International publication number: WO 2024/082864

(57) **Abstract**

An axial flux motor stator cooling structure and an axial flux motor are provided. The axial flux motor stator cooling structure includes a housing, multiple iron core windings, and an inner annular reversing flow channel assembly; the housing has an annular accommodating cavity and a bushing hole; the plurality of iron core windings are mounted in the annular accommodating cavity and form at least two flow areas with the housing; and the inner annular reversing flow channel assembly is mounted in the bushing hole, and includes at least one inner annular flow channel that is communicated with two different flow areas. It is ensured that a cooling medium can pass through each gap uniformly, so that the cooling medium can completely soak the iron core windings, thereby improving the cooling performance.

## Description

### FIELD

The present application relates to the technical field of axial flux motors, and in particular to an axial flux motor stator cooling structure and an axial flux motor.

### BACKGROUND

An axial flux motor, also known as a pancake motor, has advantages of small size, high torque density, high power density and high efficiency, and is widely used in electric vehicles, general industry, and etc.. The axial flux motor includes a housing, a stator and a rotor, and the stator and the rotor are arranged inside the housing. The motor generates various losses during the operating process, which may cause motor to generate heat. In order to improve operating efficiency of the axial flux motor, it is necessary to design a cooling structure for the axial flux motor. At present, the cooling structure may be designed in following two ways: opening a channel at a bottom portion of the housing, or introducing a cooling medium into the housing, so as to exchange heat with a heating element and then lower temperature.

For the way of opening the channel at the bottom portion of the housing, the main heating element of the motor is iron core windings of the stator, and in the way of opening the channel in a bottom plate, the cooling medium does not directly contact with the iron core windings, which causes poor heat exchange. Moreover, opening the channel in the bottom plate has a large processing difficulty, and may even affect its supporting ability and strength.

For the way of introducing the cooling medium into the housing, the cooling medium is directly introduced into a stator cavity surrounded by the housing, so as to exchange heat with the iron core windings mounted in the stator cavity. The main heating element of the motor is the iron core windings of the stator, which are arranged in the housing and spaced apart in a circumferential direction. The cooling medium flows in the housing in the circumferential direction to exchange heat with the iron core windings. However, there are gaps between the iron core windings and between the iron core windings and an inner peripheral plate and an outer peripheral plate of the housing respectively. Since the cooling medium flows in the housing along the circumferential direction, it is impossible to ensure that the cooling medium flows evenly in the gaps and achieve the optimal cooling effect.

### SUMMARY

In order to solve the above problems, a stator cooling structure and an axial flux motor is provided according to the present application, which provide several flow areas and inner annular flow channels located radially inside the flow areas. In this way, the cooling medium may flow evenly between the flow areas and the inner annular flow channels through circumferentially arranged oil injection holes, which makes flow direction of the cooling medium cover all of the iron core windings, and the cooling medium uniformly pass through gaps between the iron core windings and gaps between the iron core windings and the housing, thereby improving the cooling effect, and at the same time, avoiding over- processing on the housing, which may otherwise affect the supporting ability and strength.

An object of the present application is to provide a stator cooling structure, including:
a housing having an annular accommodating cavity and a bushing hole; multiple iron core windings mounted in the annular accommodating cavity and forming at least two flow areas with the housing; and an inner annular reversing flow channel assembly, which is mounted in the bushing hole and includes at least one inner annular flow channel that is in communication with two different flow areas.

As a preferred embodiment, the at least two flow area includes a winding outer ring flow channel, a winding inner ring flow channel and multiple inter-winding flow channels. The winding inner ring flow channel and the winding outer ring flow channel are arranged radially from inside to outside, the multiple inter-winding flow channels are spaced apart in the circumferential direction, and each of the inter-winding flow channels is communicated between the winding inner ring flow channel and the winding outer ring flow channel. Flow directions of the liquid in the inter-winding flow channel in the two flow areas communicated with the inner annular flow channel are opposite to each other.

As a preferred embodiment, there are three flow areas, namely, an oil-entering flow area, an intermediate flow area and an oil-exiting flow area. The oil-entering flow area, the intermediate flow area and the oil-exiting flow area are spaced apart in the circumferential direction. There are two inner annular passages, namely, an oil-entering flow channel and an oil-exiting flow channel. The oil-entering flow channel is communicated between the oil-entering flow area and the intermediate flow area, the oil-exiting flow channel is communicated between the intermediate flow area and the oil-exiting flow area, and a part where the oil-entering flow channel communicates with the intermediate flow area is staggered from a part where the oil-exiting flow channel communicates with the intermediate flow area in a circumferential direction.

As a preferred embodiment, the oil-entering flow channel includes an oil-entering inlet, an oil-entering outlet, and an oil-entering channel extending between the oil-entering inlet and the oil-entering outlet, and the oil-entering inlet is communicated with the oil-entering flow area, the oil-entering inlet and the oil-entering port are staggered from each other in the circumferential direction,
and the oil-entering outlet is communicated with the intermediate flow area;
the oil-exiting flow channel includes an oil-exiting inlet, an oil-exiting outlet and an oil-exiting channel extending between the oil-exiting inlet and the oil-exiting outlet. The oil-exiting inlet communicates with the intermediate flow area, the oil-exiting outlet and the oil-entering outlet are staggered from each other in the circumferential direction, the oil-exiting outlet is communicated with the oil-exiting flow area, and the oil-exiting outlet and the oil-exiting port are staggered from each other in the circumferential direction.

As a preferred embodiment, the oil-entering channel and the oil-exiting channel are spaced apart along the axial direction, the oil-entering inlet, the oil-exiting outlet, the oil-entering outlet and the oil-exiting inlet are sequentially spaced apart along a counterclockwise direction, the oil-entering channel is communicated between the oil-entering inlet and the oil-entering outlet in a clockwise direction, and the oil-exiting channel is communicated between the oil-exiting inlet and the oil-exiting outlet in a counterclockwise direction.

As a preferred embodiment, the housing includes an outer peripheral plate and an inner peripheral plate, and an annular accommodating cavity is formed between the inner peripheral plate and the outer peripheral plate;
multiple iron core windings are arranged between the outer peripheral plate and the inner peripheral plate and spaced apart in the circumferential direction, a winding outer ring flow channel is formed between the iron core windings and the outer peripheral plate, a winding inner ring flow channel is formed between the iron core windings and the inner peripheral plate, an inter-winding flow channel is formed between two adjacent iron core windings, and each inter-winding flow channel is communicated between the winding inner ring flow channel and the winding outer ring flow channel.

As a preferred embodiment, the inner annular reversing flow channel assembly is connected to the inner ring of the inner peripheral plate, and the inner annular flow channel is formed between the inner annular reversing flow channel assembly and the inner peripheral plate, and the inner peripheral plate is provided with oil injection holes, which can communicate the inner annular flow channel and the flow area.

As a preferred embodiment, two adjacent flow areas are separated from each other by a barrier member, and the barrier member comprises at least one of the following:
a first barrier member, which is inserted between two adjacent iron core windings and sandwiched between the outer peripheral plate and the inner peripheral plate;
   a partition plate, where the inner peripheral plate and the outer peripheral plate each is connected with one partition plate, and the iron core windings are each sandwiched between the two partition plates; and
a flow-guiding member connected between the inner peripheral plate and the iron core winding to form an opening between the iron core winding and the outer peripheral plate.

As a preferred embodiment, the housing further includes:
two bottom plates, where the two bottom plates are respectively connected between the inner annular reversing flow channel assembly and the outer peripheral plate, and the inner peripheral plate and the axial ends of the iron core winding are respectively connected between the two bottom plates.

As a preferred embodiment, the bottom plate is provided with multiple positioning grooves, and the positioning grooves on the two bottom plates are in one-to-one correspondence. The iron cores are inserted into the positioning grooves on the two bottom plates correspondingly, and the coil mounted outside the iron core is located between the two bottom plates.

As a preferred embodiment, an outer ring of the inner annular reversing flow channel assembly and the inner ring of the outer peripheral plate are respectively provided with steps, and the two bottom plates respectively abut and are fixed to the steps of the inner annular reversing flow channel assembly and the outer peripheral plate.

According to another object of the present application, an axial flux motor is further provided by the present application, which includes the axial flux motor stator cooling structure of at least one of the above embodiments. The axial flux motor includes at least one rotor, and the rotor is arranged on at least one side of the stator cooling structure in the axial direction, and an air gap is provided between the stator cooling structure and the rotor.

Compared with the conventional technology, the technical solution has the following advantages.

The way of soaking the iron core windings with the cooling medium can greatly lower the temperature of the iron core and the coil that form the iron core windings, ensuring the good operation and reliability of the motor, and also improving the operating efficiency and peak power of the motor.

Since the liquid flow directions in the inter-winding flow channel in the two flow areas communicated with the inner annular flow channel are opposite to each other, the cooling medium flows radially from outside to inside in the flow area communicated with the oil-entering port, and flows radially from inside to outside in the flow area communicated with the oil-exiting port until it is discharged from the oil-exiting port, enabling the cooling medium to uniformly pass through each of the flow areas, and thereby improving the cooling capacity.

By arranging the inner annular flow channel radially inside the flow area and providing multiple oil injection holes spaced apart along the circumferential direction between the inner annular flow channel and the flow area, the cooling medium can flow evenly between the flow area and the inner annular flow channel, so that the iron core winding in the flow area can be completely soaked by the cooling medium, and the cooling capacity is improved.

The multiple flow areas are formed by separating the flow areas where the iron core winding is mounted, and then the oil-entering flow channel and the oil-exiting flow channel are utilized, so that the cooling medium can flow between the flow areas. The cooling medium can uniformly pass through each of the flow areas in the radial direction, and the cooling medium can uniformly pass through each gap, so that the cooling performance is improved, and the cooling medium can completely soak the iron core winding.

The oil-entering port and the oil-entering inlet are staggered from each other, the oil-exiting port and the oil-exiting outlet are staggered from each other, and the oil-entering outlet and the oil-exiting inlet are staggered from each other, so that the cooling medium can uniformly pass through each of the flow areas and fully soak each of the iron core windings, thereby improving the cooling capacity. The temperature of the iron core and the coil forming the iron core winding can be greatly lowered, so that the good operation and the reliability of the motor are ensured, and at the same time, the operating efficiency and the peak power of the motor can be improved.

The inner annular reversing flow channel assembly can be spliced with the inner ring of the inner peripheral plate to form the oil-entering flow channel and the oil-exiting flow channel, and the two can be bonded and fixed by glue, so that the molding efficiency is improved and the processing difficulty is reduced.

The present application will be further described with reference to the attached drawings and examples.

### BRIEF DESCRIPTION OF THE DRAWINGS

FIG. 1 is a schematic structural view of an oil-entering flow channel in a stator cooling structure according to a first embodiment of the present application;
FIG 2 is a schematic structural view of an oil-exiting flow channel in the stator cooling structure according to the first embodiment of the present application;
FIG. 3 is an exploded view of the stator cooling structure according to the first embodiment of the present application;
FIG. 4 is a schematic assembly view of the stator cooling structure according to the first embodiment of the present application;
FIG. 5 is a schematic longitudinal cross-sectional view of the stator cooling structure according to the first embodiment of the present application;
FIG 6 is a schematic transversal cross-sectional view of a barrier member according to an embodiment of the present application;
FIG. 7 is a schematic transversal cross-sectional view of the barrier member according to another embodiment of the present application;
FIG. 8 is a schematic view showing an assembly process of an inner annular reversing flow channel assembly and an inner peripheral plate according to the first embodiment of the present application;
FIG. 9 is a front view of the inner annular reversing flow channel assembly according to the first embodiment of the present application;
FIG. 10 is a back view of the inner annular reversing flow channel assembly according to the first embodiment of the present application;
FIG. 11 is a schematic structural view of a stator cooling structure according to a second embodiment of the present application;
FIG. 12 is an exploded view of the stator cooling structure according to the second embodiment of the present application;
FIG. 13 is a schematic assembly view of the stator cooling structure according to the second embodiment of the present application;
FIG. 14 is a schematic longitudinal cross-sectional view of the stator cooling structure according to the second embodiment of the present application;
FIG. 15 is a schematic transversal cross-sectional view of the stator cooling structure according to the second embodiment of the present application;
FIG. 16 is a schematic structural view of an inner annular reversing flow channel assembly in the stator cooling structure according to the second embodiment of the present application;
FIG. 17 is a schematic structural view of an inner peripheral plate in the stator cooling structure according to the second embodiment of the present application.

### DETAILED DESCRIPTION OF THE EMBODIMENTS

The following description is used to disclose the present application and enable those skilled in the art to realize the present application. The preferred embodiments in the following description are only examples, and other obvious variations can occur to those skilled in the art. The basic principles of the present application defined in the following description can be applied to other embodiments, variations, improvements, equivalents and other technical solutions without departing from the spirit and scope of the present application.

### First embodiment

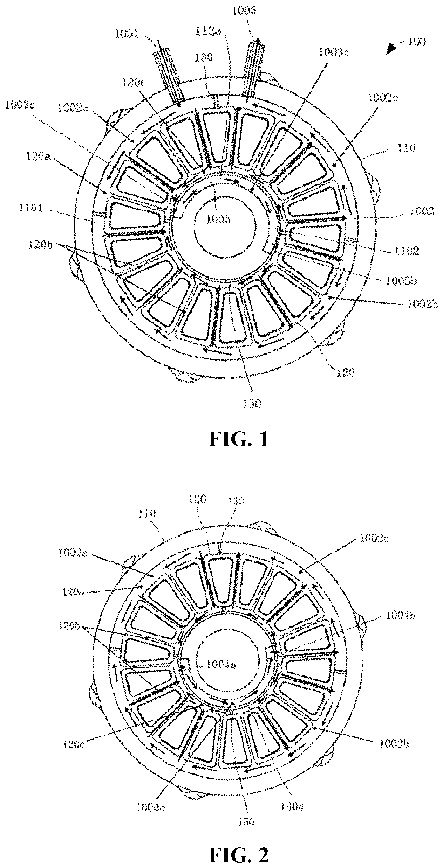

As shown in FIG. 1 and FIG. 2, an axial flux motor stator cooling structure 100 includes:
a housing 110 having an annular accommodating cavity 1101 and a bushing hole 1102; multiple iron core windings 120 mounted in the annular accommodating cavity 1101 and forming a flow area 1002 with the housing 110, where each the iron core winding 120 includes an iron core 121 and a coil 122 mounted outside the iron core 121; and
an inner annular reversing flow channel assembly 112, where the inner annular reversing flow channel assembly 112 is mounted in the bushing hole 1102 and includes at least one inner annular flow channel 112a which is in communication with two different flow areas 1002.

With reference to FIG. 1 and FIG. 2, there are three flow areas 1002, namely, an oil-entering flow area 1002a, an intermediate flow area 1002b and an oil-exiting flow area 1002c, where the oil-entering flow area 1002a, the intermediate flow area 1002b and the oil-exiting flow area 1002c are spaced apart in a circumferential direction. There are two inner annular flow channels 112a, namely, an oil-entering flow channel 1003 and an oil-exiting flow channel 1004, where the oil-entering flow channel 1003 is communicated between the oil-entering flow area1002a and the intermediate flow area 1002b, and the oil-exiting flow channel 1004 is communicated between the intermediate flow area 1002b and the oil-exiting flow area 1002c. A part where the oil-entering flow channel 1003 communicates with the intermediate flow area 1002b is staggered from a part where the oil-exiting flow channel 1004 communicates with the intermediate flow area 1002b in a circumferential direction, and a liquid flow direction in the oil-entering flow channel 1003 is opposite to a liquid flow direction in the oil-exiting flow channel 1004.

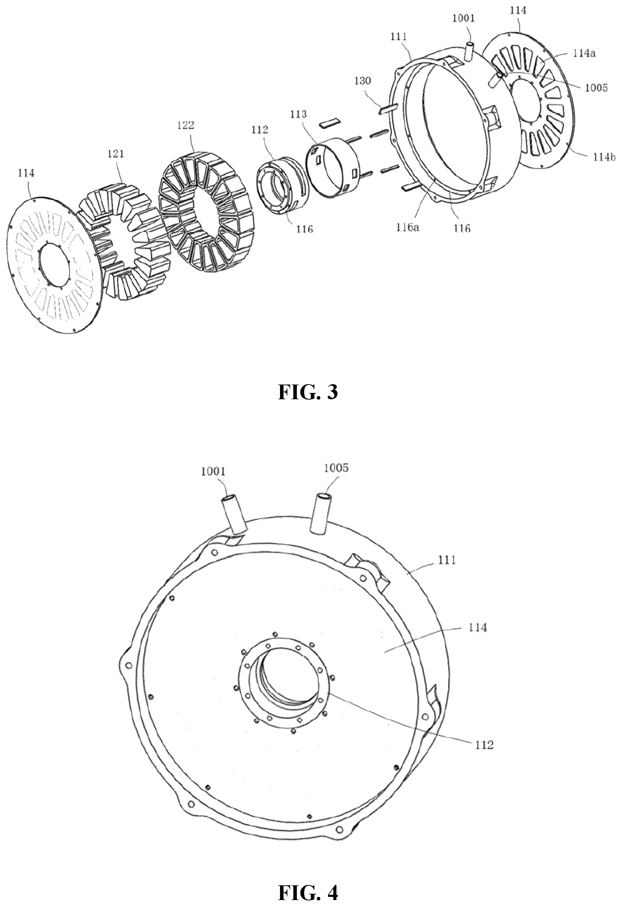

An outer periphery of the housing 110 is provided with an oil-entering port 1001 and an oil-exiting port 1005, and a cooling medium (including but not limited to cooling oil) is introduced into the oil-entering flow area 1002a through the oil-entering port 1001 and flows radially from outside to inside until it flows into the intermediate flow area 1002b through the oil-entering flow channel 1003. Since the parts where the oil-entering flow channel 1003 and the oil-exiting flow channel 1004 communicate with the intermediate flow area 1002b are staggered in the circumferential direction, the cooling medium may flow over the intermediate flow area 1002b and then flow into the oil-exiting flow channel 1004. The cooling medium introduced from the part where the oil-entering flow channel 1003 is communicated with the intermediate flow area 1002b flows radially from inside to outside, and at the same time it flows along the circumferential direction to the part where the oil-exiting flow channel 1004 is communicated with the intermediate flow area 1002b, until it flows to the oil-exiting flow channel 1004 and into the oil-exiting flow area 1002c through the oil-exiting flow channel 1004. The cooling medium then flows radially from inside to outside in the oil-exiting flow area 1002c, and finally it is collected at the oil-exiting port 1005 and discharged through the oil-exiting port 1005. Multiple flow areas are formed by separating the flow area 1002 where the iron core winding 120 is mounted, and then the oil-entering flow channel 1003 and the oil-exiting flow channel 1004 are utilized to enable the cooling medium to flow among the flow areas. In this way, the cooling medium can uniformly pass through each of the flow areas in the radial direction, and the cooling medium can uniformly pass through each of the gaps, so that the cooling performance is improved, and the cooling medium can completely soak the iron core winding 120. Compared with the way of opening the channel in the housing and introducing cooling water, the way of soaking the iron core winding 120 with the cooling medium can greatly lower the temperature of the iron core 121 and the coil 122 that form the iron core winding 120, as shown in FIG. 3, ensuring the good operation and reliability of the motor, and at the same time improving the operating efficiency and peak power of the motor.

It should be noted that the intermediate flow area 1002b is divided into two flow areas, that is, a left flow area and a right flow area. The oil-entering flow channel 1003 communicates the oil-entering flow area 1002a with the right flow area, and the oil-exiting flow channel 1004 communicates the left flow area with the oil-exiting flow area 1002c. Since the flow directions of the cooling medium in the oil-entering flow channel 1003 and the oil-exiting flow channel 1004 are opposite to each other, the flow directions of the cooling medium in the oil-entering flow area 1002a and the right flow area are opposite to each other, and the flow directions of the cooling medium in the left flow area and the oil-exiting flow area 1002c are opposite to each other. The cooling medium passes through the oil-entering flow area 1002a radially from outside to inside, the cooling medium passes through the right flow area radially from inside to outside, the cooling medium passes through the left flow area radially from outside to inside, and the cooling medium passes through the oil-exiting flow area 1002c radially from inside to outside, until the cooling medium is discharged from the oil-exiting port 1005, thus ensuring the cooling medium to uniformly pass through each of the flow areas and improving the cooling performance. As shown in FIG. 1 to FIG. 8, the housing 110 includes an outer peripheral plate 111 and an inner peripheral plate 113, which is connected to an outer ring of the inner annular reversing flow channel assembly 112. The oil-entering flow channel 1003 and the oil-exiting flow channel 1004 are formed between the inner annular reversing flow channel assembly 112 and the inner peripheral plate 113, and the flow area 1002 is formed between the inner peripheral plate 113 and the outer peripheral plate 111. The oil-entering port 1001 and the oil-exiting port 1005 are communicated with the outer peripheral plate 111, and the inner peripheral plate 113 is provided with an oil-entering inlet 1003a, an oil-entering outlet 1003b, an oil-exiting inlet 1004a and an oil-exiting outlet 1004b; multiple iron core windings 120 are arranged between the outer peripheral plate 111 and the inner peripheral plate 113 and spaced apart in the circumferential direction. A winding outer ring flow channel 120a is formed between the iron core windings 120 and the outer peripheral plate 111, a winding inner ring flow channel 120c is formed between the iron core windings 120 and the inner peripheral plate 113, and an inter-winding flow channel 120b is formed between two adjacent iron core windings 120;
multiple barrier members 130 are arranged in the flow area 1002 and spaced apart in the circumferential direction to separate the flow area 1002 to form the oil-entering flow area 1002a, the intermediate flow area 1002b and the oil-exiting flow area 1002c.

The inner annular reversing flow channel assembly 112 may be spliced to the inner ring of the inner peripheral plate 113 to form the oil-entering flow channel 1003 and the oil-exiting flow channel 1004. The inner peripheral plate 113 and the inner annular reversing flow channel assembly 112 may be bonded and fixed with each other by glue, which improves the molding efficiency and reduces the processing difficulty. With reference to FIG. 1 and FIG. 3, there are gaps between the iron core winding 120 and the inner peripheral plate 113 and the outer peripheral plate 111, respectively, so as to form the winding inner ring flow channel 120c and the winding outer ring flow channel 120a, respectively, and thus ensure insulation. The inner peripheral plate 113 may be made of high-strength nonmetallic materials including glass fiber composite, carbon fiber composite or plastic, such as PPS, PPA, PA, PEEK, and the like, so as to ensure the strength of the inner peripheral plate 113, shorten the distance between the iron core winding 120 and the inner peripheral plate 113, and ensure the advantage of small overall radial size, thereby increasing the applicability of the mounting environment. Besides high-strength nonmetallic materials, the outer peripheral plate 111 and the inner annular reversing flow channel assembly 112 may also be made of high-strength metal materials, including alloy steel or aluminum alloy.

The inner annular reversing flow channel assembly 112, the outer peripheral plate 111 and the inner peripheral plate 113 may all be annular in shape, so that the winding inner ring flow channel 120c and the winding outer ring flow channel 120a are generally annular in shape. Also, the inner annular reversing flow channel assembly 112, the outer peripheral plate 111 and the inner peripheral plate 113 may also be in other shapes, which is not limited here.

As shown in FIG. 1 and FIG. 3, multiple iron core windings 120 are circumferentially arranged around a stator center line and evenly spaced apart, and the inter-winding flow channel 120b is formed between two adjacent iron core windings 120. The iron core winding 120 includes an iron core 121 and a coil 122, which is wound around an outer ring of the iron core 121. The iron core 121 may be
formed by stacking multiple silicon steel sheets in the radial direction, or by molding SMC (soft magnetic compliant material). The iron core 121 may be in trapezoidal shape, where an upper side of the trapezoidal shape of the iron core 121 is arranged inward, and a lower side of the trapezoidal shape of the iron core 121 is arranged outward. The coil 122 may be a round copper wire or a flat copper wire.

The barrier member 130 is used to separate the flow area 1002 to form a corresponding number of flow areas. With reference to FIG. 1, there are three barrier members 130. At this time, the flow area 1002 is divided into three flow areas, namely, the oil-entering flow area 1002a, the intermediate flow area 1002b and the oil-exiting flow area 1002c. It can be seen that the number of the barrier members 130 and the flow areas is associated with the number of the flow channels, that is, the number of the barrier members 130 is equal to the number of the flow areas, and two adjacent flow areas may be communicated with each other through one of the flow channels. The barrier member 130 may be made of high-strength nonmetallic materials to ensure insulation, and the barrier member 130 may also have following two embodiments.

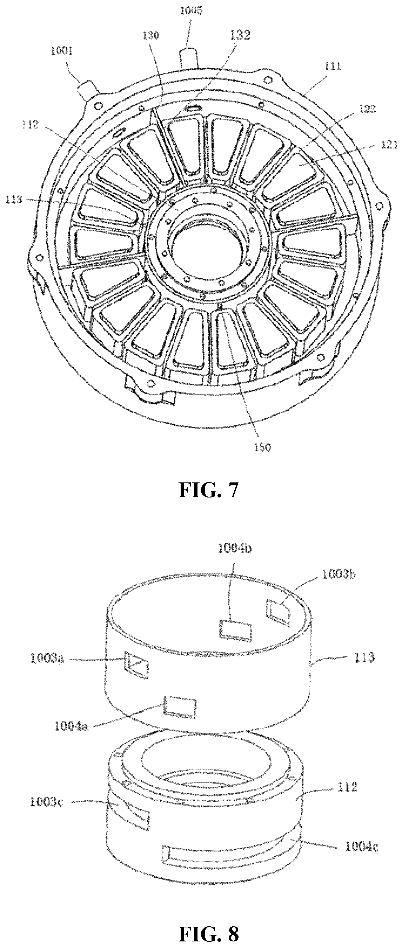

In one embodiment, the barrier member 130 includes a first barrier member 132, which is inserted between two adjacent iron core windings 120 and sandwiched between the outer peripheral plate 111 and the inner peripheral plate 113, as shown in FIG. 7.

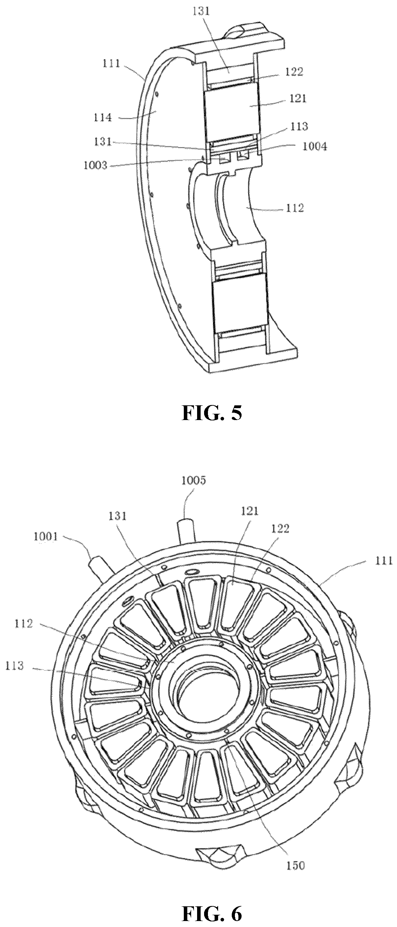

In another embodiment, the barrier member 130 includes two partition plates 131, and the inner peripheral plate 113 and the outer peripheral plate 111 are connected with the two partition plate 131 respectively, and the iron core winding 120 is sandwiched between the two partition plates 131, as shown in FIG. 1 and FIG. 6. Since the distances between the iron core winding 120 and the inner peripheral plate 113 and between the iron core winding 120 and the outer peripheral plate and 111 may be different, the sizes of the partition plates 131 constituting the barrier member 130 may also be different. For example, the partition plate 131 between the iron core winding 120 and the inner peripheral plate 113 is relatively short in length, while the partition plate 131 between the iron core winding 120 and the outer peripheral plate 111 is relatively long in length. With reference to FIG. 1, the oil-entering flow area 1002a is used to communicate with the oil-entering port 1001, the oil-exiting flow area 1002c is used to communicate with the oil-exiting port 1005, and the intermediate flow area 1002b enables the cooling medium to flow in each of the flow areas through the oil-entering flow channel 1003 and the oil-exiting flow channel 1004. One oil-entering flow area 1002a and one oil-exiting flow area 1002c are provided, and multiple intermediate flow areas 1002b are provided, or the intermediate flow area 1002b may be further divided. The intermediate flow area 1002b is located between the oil-entering flow area 1002a and the oil-exiting flow area 1002c, and the sizes of the oil-entering flow area 1002a and the oil-exiting flow area 1002c in the circumferential direction are obviously smaller than that of the intermediate flow area 1002b. Since the flow area 1002 is divided into multiple flow areas, and by arranging the oil-entering port 1001 and the oil-exiting port 1005 at a radial inner side and a radial outer side of the flow area 1002 staggered from the flow channels, the cooling medium can flow uniformly in each of the flow areas along the radial direction, and thus flow over the gaps completely, thereby improving the cooling performance.

In another embodiment, the barrier member 130 includes a flow-guiding member 150, which is connected between the inner peripheral plate 113 and the iron core winding 120 to form an opening between the iron core winding 120 and the outer peripheral plate 111, so that the intermediate flow area 1002b is separated by the flow-guiding member 150, and the separated two flow areas are communicated with each other through the opening.

As shown in FIG. 1 and FIG. 2, the intermediate flow area 1002b may be divided by the flow-guiding member 150, and the flow-guiding member 150 is located in the intermediate flow area 1002b and between the oil-entering outlet 1003b and the oil-exiting inlet 1004a. When one flow-guiding member 150 is provided, the flow-guiding member 150 is sandwiched between one of the iron core windings 120 and the inner peripheral plate 113. The oil-exiting inlet 1004a and the oil-entering outlet 1003b are located at the radial inner side of the intermediate flow area 1002b, and are respectively located at a left side and a right side of the intermediate flow area 1002b in the circumferential direction. In this way, the cooling medium introduced from the oil-entering outlet 1003b moves to the left in the winding inner ring flow channel 120c, and simultaneously flows to the winding outer ring flow channel 120a through the inter-winding flow channels 120b, and then moves to the left in the winding outer ring flow channel 120a. Since the flow-guiding member 150 is sandwiched between the iron core winding 120 and the inner peripheral plate 113 to block the cooling medium in the winding inner ring flow channel 120c from passing through, that is, the flow-guiding member 150 divides the intermediate flow area 1002b into two areas, where the cooling medium in the right area flows radially from inside to outside, while the cooling medium in the left area flows radially from outside to inside, until the cooling medium flows into the oil-exiting flow channel 1004 through the oil-exiting inlet 1004a.

It should be noted that the number of the flow-guiding members 150 is an odd number, and two adjacent flow-guiding members 150 are spaced apart on the radial inner side and the radial outer side of the iron core winding 120. The flow-guiding members 150 respectively close to the oil-entering outlet 1003b and the oil-exiting inlet 1004a are arranged on the radial inner side of the iron core winding 120, that is, sandwiched between the iron core winding 120 and the inner peripheral plate 113, while the flow-guiding member 150 located on the radial outer side of the iron core winding 120 is sandwiched between the iron core winding 120 and the outer peripheral plate 111. In this way, the cooling medium can pass through the areas separated by the flow-guiding member 150 along an S-shape, and the cooling medium can uniformly pass through the areas along the radial direction, so that the iron core winding can be soaked by the cooling medium, thereby achieving a better cooling effect.

Both the flow-guiding member 150 and the barrier member 130 are made of high-strength nonmetallic materials, and the sum of the numbers of the flow-guiding member 150 and the barrier member 130 may be 2N, that is, the sum of the numbers of the flow-guiding member 150 and the barrier member 130 is even. In this case, the number of separation forming areas may also be 2N, and the number of the flow channels communicating the two areas is 1/2N, where N = 1, 2, 3, or the like.

As shown in FIG. 1 and FIG. 2, the oil-entering flow channel 1003 includes an oil-entering inlet 1003a, an oil-entering outlet 1003b, and an oil-entering channel 1003c extending between the oil-entering inlet 1003a and the oil-entering outlet 1003b. The oil-entering inlet 1003a communicates with the oil-entering flow area 1002a, the oil-entering inlet 1003a and the oil-entering port 1001 are arranged in a staggered way in the circumferential direction, and the oil-entering outlet 1003b communicates with the intermediate flow area 1002b.

Specifically, the oil-entering port 1001 and the oil-entering inlet 1003a are correspondingly communicated with the oil-entering flow area 1002a, and the oil-entering port 1001 and the oil-entering inlet 1003a are respectively arranged at the radial outer side and the radial inner side of the oil-entering flow area 1002a and at the same time at both sides of the oil-entering flow area 1002a in the circumferential direction. In this way, the cooling medium introduced from the oil-entering port 1001 can pass through the oil-entering flow area 1002a in the circumferential direction, and flow into the oil-entering channel 1003c through the oil-entering inlet 1003a, so that the cooling medium can uniformly pass through the oil-entering flow area 1002a. Multiple oil-entering inlets 1003a and multiple oil-entering outlets 1003b are provided. The cooling medium introduced from the oil-entering port 1001 flows in the oil-entering flow area 1002a from right to left, while the cooling medium introduced from the oil-entering inlet 1003a into the oil-entering channel 1003c flows from left to right to the oil-entering outlet 1003b and is introduced into the intermediate flow area 1002b through the oil-entering outlet 1003b.

As shown in FIG. 1 and FIG. 2, the oil-exiting flow channel 1004 includes an oil-exiting inlet 1004a, an oil-exiting outlet 1004b, and an oil-exiting channel 1004c extending between the oil-exiting inlet 1004a and the oil-exiting outlet 1004b. The oil-exiting inlet 1004a communicates with the intermediate flow area 1002b, and the oil-exiting inlet 1004a and the oil-entering outlet 1003b are arranged to be staggered in the circumferential direction. The oil-exiting outlet 1004b communicates with the oil-exiting flow area 1002c, and the oil-exiting outlet 1004b and the oil-exiting port 1005 are arranged to be staggered in the circumferential direction.

It can be seen that when two or more inner annular flow channels 112a are provided, the two or more inner annular flow channel 112a are spaced apart in the axial direction and staggered in the circumferential direction, and the liquid flow directions in two adjacent inner annular flow channel 112a in the axial direction are opposite to each other.

Specifically, the cooling medium introduced into the oil-exiting channel 1004c from the oil-exiting inlet 1004a flows from left to right to the oil-exiting outlet 1004b and flows to the oil-exiting flow area 1002c through the oil-exiting outlet 1004b, and the oil-exiting outlet 1004b and the oil-exiting port 1005 are arranged to be staggered in the circumferential direction. In this way, the cooling medium introduced from the oil-exiting outlet 1004b into the oil-exiting flow area 1002c flows to the oil-exiting port 1005 from right to left and is collected there, until the cooling medium is discharged through the oil-exiting port 1005. The number of the oil-exiting inlet 1004a and the oil-exiting outlet 1004b may also be multiple.

As shown in FIG. 8, the oil-entering inlet 1003a, the oil-entering outlet 1003b, the oil-exiting inlet 1004a and the oil-exiting outlet 1004b, as oil injection holes 1005, may be in square or circular shape and the like. By adjusting the number, position and size of each opening, the flow rate can be adjusted, so as to achieve the required flow rate and cooling effect, and the shape and size of each opening may be different.

With reference to FIG. 1, the oil-entering inlet 1003a is located downstream of the oil-entering port 1001 in a counterclockwise direction, so that the cooling medium flows counterclockwise in the oil-entering flow area 1002a, and the flow direction of the cooling medium can be adjusted by changing the mounting direction. With continued reference to FIG. 1 and FIG. 2, in this embodiment, the cooling medium flows clockwise in the oil-entering flow channel 1003, flows clockwise in the intermediate flow area, flows counterclockwise in the oil-exiting flow channel 1004 and flows counterclockwise in the oil-exiting flow area 1002c. Similarly, by adjusting the mounting direction, the flow direction of the cooling medium in each area may be further adjusted.

In summary, the oil-entering outlet 1003b is a communication part between the oil-entering flow channel 1003 and the intermediate flow area 1002b, and the oil-exiting inlet 1004a is a communication part between the oil-exiting flow channel 1004 and the intermediate flow area 1002b. The oil-entering port 1001 and the oil-entering inlet 1003a are staggered from each other, the oil-exiting port 1005 and the oil-exiting outlet 1004b are staggered from each other, and the oil-entering outlet 1003b and the oil-exiting inlet 1004a are staggered from each other, in which case the cooling medium can uniformly pass through each of the flow areas and fully soak each of the iron core winding 120, thereby improving the cooling capacity.

As shown in FIG. 5, FIG. 8 to FIG. 10, the oil-entering channel 1003c and the oil-exiting channel 1004c are opened at the outer ring of the inner annular reversing flow channel assembly 112, and the oil-entering channel 1003c and the oil-exiting channel 1004c are spaced apart in the axial direction. By opening the oil-entering channel 1003c and the oil-exiting channel 1004c at the outer ring of the inner annular reversing flow channel assembly 112, and then splicing the inner peripheral plate 113 to the outer ring of the inner annular reversing flow channel assembly 112, the oil-entering flow channel 1003 is formed between the oil-entering channel 1003c and the inner peripheral plate 113, and the oil-exiting flow channel 1004 is formed between the oil-exiting channel 1004c and the inner peripheral plate 113, thus reducing the processing difficulty and ensuring the stability and reliability of the structure.

As shown in FIG. 3, the housing 110 further includes:
two bottom plates 114, which are respectively connected between the inner annular reversing flow channel assembly 112 and the outer peripheral plate 111, and the inner peripheral plate 113 and two axial ends of the iron core winding 120 are respectively connected between the two bottom plates 114.

Specifically, the outer ring of the inner annular reversing flow channel assembly 112 and the inner ring of the outer peripheral plate 111 are respectively provided with steps 116, and the two bottom plates 114 respectively abut and are fixed on the steps 116 of the inner annular reversing flow channel assembly 112 and the outer peripheral plate 111 for pre-fixing, and then can be fixed by bolts. For example, each bottom plate 114 is provided with a bottom plate mounting hole 114b, and the step 116 is provided with a step mounting hole 116a. When the bottom plates 114 respectively abut against the steps 116 of the inner annular reversing flow channel assembly 112 and the outer peripheral plate 111, the bottom plate mounting hole 114a is opposite to the step mounting hole 116a, and finally the bolts pass through the bottom plate mounting hole 114b and screwed to the step mounting hole 116a.

The bottom plate 114 is provided with multiple positioning grooves 114a, and the positioning grooves 114a on the two bottom plates 114 are in one-to-one correspondence. The iron core 121 is inserted into the corresponding positioning grooves 114a of the two bottom plates 114, and the coil 122 mounted outside the outer ring of the iron core 121 is located between the two bottom plates 114. The positioning groove 114a and the iron core 121 are fitted with each other in trapezoidal shape, and the iron core 121 may be strengthened and fixed in the positioning groove 114a by glue to ensure the bonding strength, thereby improving the stability of the structure. Moreover, through the positioning groove 114a, the iron core winding 120 may be positioned and mounted on the bottom plate 114, so as to improve the mounting efficiency and ensure the mounting position.

The inner peripheral plate 113 may be fixed to the two bottom plates 114 by glue.

The bottom plate 114 is made of nonmetallic material and has the characteristics of high strength, non-magnetic conductivity and non-conductivity, so as to reduce eddy current caused by magnetic field penetration and provide high-strength support. Additionally, the bottom plate 114 is relatively thin, which ensures that at least one axial end of the iron core winding 120 may be fitted with the rotor air gap respectively. This allows for assembly into configurations such as a single-stator and dual-rotor or a multi-stator and multi-rotor cascade axial flux motor.

As shown in FIG. 3 to FIG. 5, the two bottom plates 114 are mounted outside the inner annular reversing flow channel assembly 112 and abut on the step 116 of the outer ring of the bottom plate 114. At this time, the two bottom plates 114 are approximately flush with the axial ends of the inner annular reversing flow channel assembly 112 respectively, and one of the bottom plates 114 is embedded inside the outer peripheral plate 111. A deceleration structure may be mounted on a side of the bottom plate 114 away from the iron core winding 120, and the deceleration structure may be partially or completely embedded in an area surrounded by the outer peripheral plate 111, so that the space is reasonably utilized, and the advantages of compact overall structure and small volume are ensured. Since the deceleration structure is mounted on an outer surface of the bottom plates, the cooling medium flowing between the two bottom plates 114 can be used for heat exchange. A rotating shaft passes through the inner annular reversing flow channel assembly 112, and a bearing is arranged between the rotating shaft and the inner annular reversing flow channel assembly 112, so that the rotor connected to the rotating shaft can rotate relative to the iron core winding, and the bearing mounted in the inner annular reversing flow channel assembly 112 can also exchange heat through the cooling medium, thus the mounting space is reasonably utilized and the cooling capacity is improved.

A method for assembling the stator cooling structure 100 is as follows:
mounting the inner annular reversing flow channel assembly 112, the outer peripheral plate 111, the inner peripheral plate 113, the iron core winding 120, the barrier member 130 and the flow-guiding member 150 on the bottom plate 114 as shown in FIG. 1 to FIG. 7, and then sealing the other bottom plate 114 on the other side of the inner annular reversing flow channel assembly 112 and the outer peripheral plate 111, which make the assembly both convenient and efficient.

With reference to FIG. 1 and FIG. 2, the cooling medium flows in the stator cooling structure 100 as follows:
the cooling medium is introduced into the oil-entering flow area 1002a from the oil-entering port 1001, and then flows counterclockwise in the oil-entering flow area 1002a, while the winding outer ring flow channel 120a, the inter-winding flow channel 120b and the winding inner ring flow channel 120c located in the oil-entering flow area 1002a are filled from outside to inside in the radial direction, and then the cooling medium flows into the oil-entering flow channel 1003 from the oil-entering inlet 1003a at the winding inner ring flow channel 120c.

The cooling medium flows clockwise in the oil-entering flow channel 1003, that is, flows from the oil-entering inlet 1003a to the oil-entering outlet 1003b, and is introduced into the intermediate flow area 1002b.

The intermediate flow area 1002b is divided into a left side and a right side by the flow-guiding member 120c. The cooling medium introduced into the intermediate flow area 1002b from the oil-entering outlet 1003b flows counterclockwise in the intermediate flow area 1002b as a whole, while the cooling medium flows radially from inside to outside in the right side of the intermediate flow area 1002b and radially from outside to inside in the left side of the intermediate flow area 1002b, and then the cooling medium flows into the oil-exiting flow channel 1004 from the oil-exiting inlet 1004a at the winding inner ring flow channel 120c.

The cooling medium flows counterclockwise in the oil-exiting flow channel 1004, that is, flows from the oil-exiting inlet 1004a to the oil-exiting outlet 1004b, and is introduced into the oil-exiting flow area 1002c.

The cooling medium flows counterclockwise in the oil-exiting flow area 1002c, and at the same time, and the winding outer ring flow channel 120a, the inter-winding flow channel 120b and the winding inner ring flow channel 120c located in the oil-exiting flow area 1002c are filled from inside to outside in the radial direction, and then the cooling medium is discharged from the oil-exiting port 1005 at the winding inner ring flow channel 120c.

In summary, multiple flow areas are formed by dividing up the flow area 1002 where the multiple iron core windings 120 is mounted, and then the cooling medium can flow between the flow areas through the oil-entering flow channel 1003 and the oil-exiting flow channel 1004. In this way, the cooling medium can uniformly pass through each of the flow areas in the radial direction, and the cooling medium can uniformly pass through each of the gaps, so that the cooling performance is improved, and the cooling medium can completely soak the iron core winding 120. Compared with the way of opening the channel in the housing and introducing the cooling water, the way of soaking the iron core winding 120 with the cooling medium can greatly lower the temperature of the iron core 121 and the coil 122 that form the iron core winding 120, ensuring the good operation and reliability of the motor, and at the same time improving the operating efficiency and peak power of the motor. The oil-entering port 1001 and the oil-entering inlet 1003a are staggered from each other, the oil-exiting port 1005 and the oil-exiting outlet 1004b are staggered from each other, and the oil-entering outlet 1003b and the oil-exiting inlet 1004a are staggered from each other, in which case the cooling medium can uniformly pass through each of the flow areas and fully soak each of the iron core winding 120, thereby improving the cooling capacity. The inner annular reversing flow channel assembly 112 may be spliced with the inner ring of the inner peripheral plate 11 to form the oil-entering flow channel 1003 and the oil-exiting flow channel 1004, and they can be bonded and fixed by glue, thus improving the molding efficiency and reducing the processing difficulty.

### Second embodiment

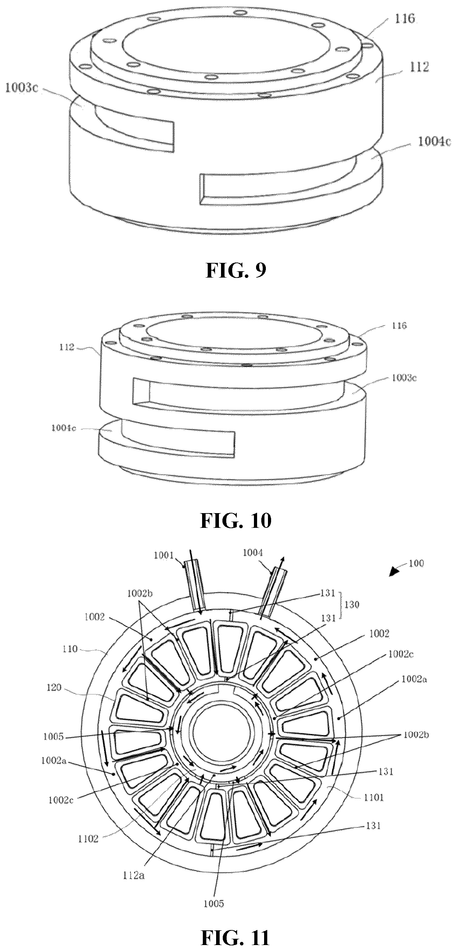

As shown in FIG. 11, an axial flux motor stator cooling structure 100 includes:
a housing 110 having an annular accommodating cavity 1101 and a bushing hole 1102; multiple iron core windings 120 mounted in the annular accommodating cavity 1101 and form at least two flow areas 1002 with the housing 110, where the iron core winding 120 includes a stator core 121 and a coil 122 mounted outside the stator core 121, and the flow area 1002 includes a winding outer ring flow channel 1002a, a winding inner ring flow channel 1002c and multiple inter-winding flow channels 1002b, and the winding inner ring flow channel 1002c and the winding outer ring flow channel 1002a are arranged from inside to outside in the radial direction, the multiple inter-winding flow channels 1002b are spaced apart in the circumferential direction, and each of the multiple inter-winding flow channels 1002b is communicated between the winding inner ring flow channel 1002c and the winding outer ring flow channel 1002a;
an inner annular reversing flow channel assembly 112, where the inner annular reversing flow channel assembly 112 is mounted in the bushing hole 1102 and includes at least one inner annular flow channel 112a, which communicates two different flow areas 1002, and the liquid flow directions in the inter-winding flow channels 1002b in the two flow areas 1002 communicated with the inner annular flow channel 112a are opposite to each other.

An oil-entering port 1001 and an oil-exiting port 1004 are arranged on an outer periphery of the housing 110, and in the corresponding flow area 1002 that is in communication with the oil-entering port 1001, the cooling medium (including but not limited to cooling oil) introduced from the oil-entering port 1001 first flows into the multiple winding outer ring flow channel 1002a, and the cooling medium flows in the winding outer ring flow channels 1002a, and at the same time, the cooling medium flows from the multiple inter-winding flow channels 1002b into the winding inner ring flow channel 1002c. Due to the multiple oil injection holes 1005 communicating between the winding inner
ring flow channel 1002c and the inner annular flow channel 112a are spaced apart in the circumferential direction, the cooling medium can flow in the winding inner ring flow channel 1002c, and one iron core winding 120 is mounted between two adjacent inter-winding flow channels 1002b. Therefore, the flow direction of the cooling medium can cover all of the iron core windings and completely surround the outer periphery of each of the iron core windings 120, thus effectively improving the cooling capacity and ensuring the reliability of the stator. In addition, the liquid flow directions in the inter-winding flow channel 1002b in the two flow areas communicated with the inner annular flow channel 112a are opposite to each other, so that the cooling medium flows radially from outside to inside in the flow area 1002 communicating with the oil-entering port 1001, and flows radially from inside to outside in the flow area 1002 communicating with the oil-exiting port 1004, and then cooling medium is discharged from the oil-exiting port 1004, enabling the cooling medium to uniformly pass through each of the flow areas and thus improve the cooling performance.

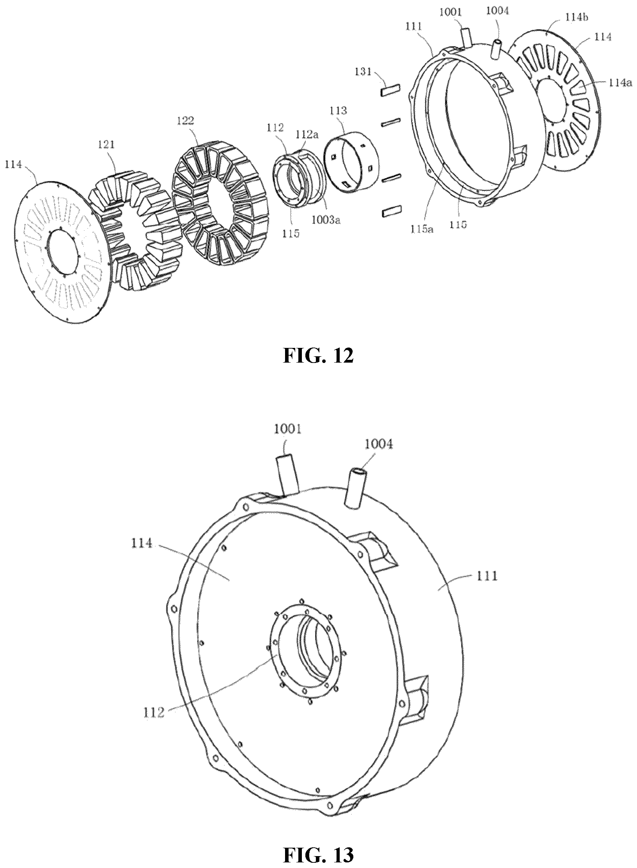

In summary, the inner annular flow channel 112a is arranged radially inside the flow area 1002, and multiple oil injection holes 1005 are arranged between the inner annular flow channel 112a and the flow area 1002 and spaced apart in the circumferential direction, so that the cooling medium can uniformly flow between the flow area 1002 and the inner annular flow channel 112a, and the iron core winding 120 in the flow area 1002 can be completely soaked by the cooling medium, thereby improving the cooling capacity. Compared with the way of opening the channel in the bottom plate and introducing the cooling water, the way of soaking the iron core winding 120 with the cooling medium can greatly lower the temperature of the stator core 121 and the coil 122 that form the iron core winding 120, as shown in FIG. 12, so as to ensure the good operation and reliability of the motor, and at the same time improve the operating efficiency and peak power of the motor.

With reference to FIG. 11, multiple flow areas 1002 and multiple inner annular flow channels 112a are provided, and each of the inner annular flow channels 112a communicates two flow areas 1002, so that the cooling medium can flow in the two flow areas 1002. When there are three or more flow areas 1002, the multiple flow areas 1002 are connected end to end in sequence between the oil-entering port 1001 and the oil-exiting port 1004. For example, the cooling medium passes through the multiple flow areas 1002 in turn in the circumferential direction, or the cooling medium passes through the multiple flow areas 1002 in a staggered manner, where the cooling medium introduced from the oil-entering port 1001 can pass through each of the flow areas 1002 in turn and circularly, and then the cooling medium is discharged from the oil-exiting port 1004. When two or more inner annular flow channels 112a are provided, the inner annular flow channels 112a are arranged in a staggered manner, including but not limited to an up and down staggered manner, so that the cooling medium can pass through each of the flow areas 1002 in turn based on the flowing direction.

As shown in FIG. 11 to FIG. 15, the housing 110 includes an outer peripheral plate 111 and an inner peripheral plate 113. The inner peripheral plate 113 is connected to the outer ring of the inner annular reversing flow channel assembly 112. The inner annular flow channel 112a is formed between the inner annular reversing flow channel assembly 112 and the inner peripheral plate 113. The flow area 1002 is formed between the inner peripheral plate 113 and the outer peripheral plate 111. The oil-entering port 1001 and the oil-exiting port 1004 are communicated on the outer peripheral plate 111.

Multiple iron core windings 120 are arranged between the outer peripheral plate 111 and the inner peripheral plate 113 and spaced apart in the circumferential direction. The winding outer ring flow channel 1002a is formed between the iron core windings 120 and the outer peripheral plate 111. The winding inner ring flow channel 1002c is formed between the iron core windings 120 and the inner peripheral plate 113. The inter-winding flow channel 1002b is formed between two adjacent iron core windings 120;
two adjacent flow areas 1002 are separated by a barrier member 130.

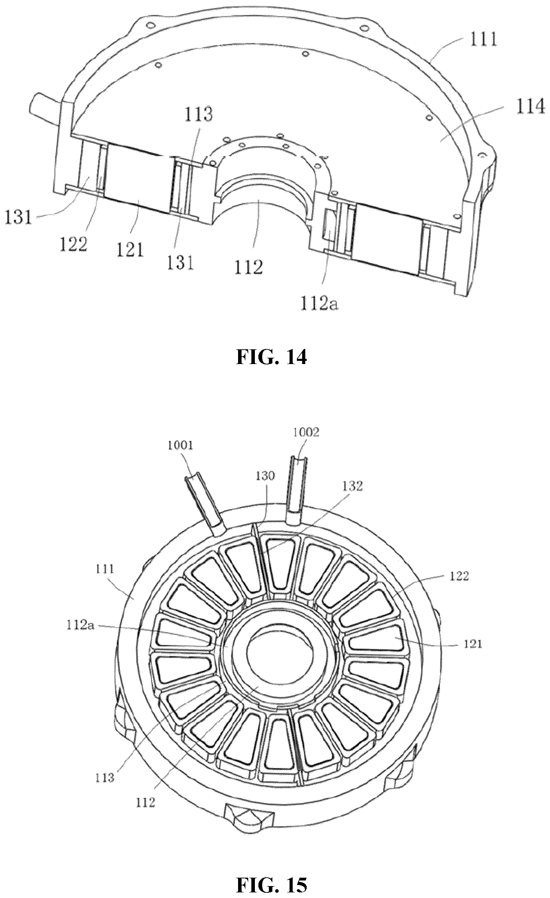

The inner annular reversing flow channel assembly 112 may be spliced at the inner ring of the inner peripheral plate 113 to form the inner annular flow channel 112a, and the inner annular reversing flow channel assembly 112 and the inner ring of the inner peripheral plate 113 can be bonded and fixed by glue, thus improving the molding efficiency and reducing the processing difficulty. With reference to FIG. 15, there are gaps between the iron core winding 120 and the inner peripheral plate 113 and between the iron core winding 120 and the outer peripheral plate 111, respectively, so as to form the winding inner ring flow channel 1002c and the winding outer ring flow channel 1002a, respectively, and thus ensure insulation. The inner peripheral plate 113 may be made of high-strength nonmetallic materials including glass fiber composite, carbon fiber composite or plastic, such as PPS, PPA, PA, PEEK, and the like, so as to ensure the strength of the inner peripheral plate 113, shorten the distance between the iron core winding 120 and the inner peripheral plate 113, and ensure the advantage of small overall radial size, thereby increasing the applicability of the mounting environment. Besides high-strength nonmetallic materials, the outer peripheral plate 111 and the inner annular reversing flow channel assembly 112 may also be made of high-strength metal materials,
including alloy steel or aluminum alloy.

The inner annular reversing flow channel assembly 112, the outer peripheral plate 111 and the inner peripheral plate 113 may all be annular in shape, so that the winding inner ring flow channel 1002c and the winding outer ring flow channel1002a are generally annular in shape. Also, the inner annular reversing flow channel assembly 112, the outer peripheral plate 111 and the inner peripheral plate 113 may also be in other shapes, which is not limited here.

The number of the barrier members 130 is consistent with the number of the flow areas 1002, that is, when the number of the barrier members 130 is two, the number of the flow areas 1002 is also two.

As shown in FIG. 12 and FIG. 15, the several iron core windings 120 are circumferentially arranged and evenly spaced apart around a stator center line. The iron core winding 120 includes a stator core 121 and a coil 122, which is wound around the outer ring of the stator core 121. The stator core 121 may be formed by stacking several silicon steel sheets in the radial direction, or molded by SMC (soft magnetic compliant material). The stator core 121 may be in trapezoidal shape, where an upper side of the trapezoidal shape of the stator core 121 is arranged inward, and a lower side of the trapezoidal shape of the stator core 121 is arranged outward. The coil 122 may be a round copper wire or a flat copper wire.

The number of the flow areas 1002 may be determined based on the barrier members 130. With reference to FIG. 11 and FIG. 15, two barrier members 130 are provided, in which case, two flow areas 1002 are provided. The barrier members 130 are connected between the outer peripheral plate 111 and the inner peripheral plate 113, and the two barrier members 130 are arranged symmetrically in a vertical direction to form two flow areas 1002 with a same shape and being arranged symmetrically left and right. The barrier member 130 may be made of high-strength nonmetallic materials to ensure insulation, and the barrier member 130 may also have the following two embodiments.

In one embodiment, the barrier member 130 is inserted between two adjacent iron core windings 120 and is sandwiched between the outer peripheral plate 111 and the inner peripheral plate 113, as shown in FIG. 15.

In another embodiment, the barrier member 130 includes two partition plates 131. The inner peripheral plate 113 and the outer peripheral plate 111 are connected with the two partition plate 131 respectively, and the iron core winding 120 is sandwiched between the two partition plates 131, as shown in FIG. 11 and FIG. 12. Since the distances between the iron core winding 120 and the inner peripheral plate 113 and between the iron core winding 120 and the outer peripheral plate 111 may be different, the sizes of the partition plates 131 constituting the barrier member 130 may be different. For example, the partition plate 131 between the iron core winding 120 and the inner peripheral plate 113 is relatively short in length, while the partition plate 131 between the iron core winding 120 and the outer peripheral plate 111 is relatively long in length.

As shown in FIG. 11, the oil-entering port 1001 and the oil-exiting port 1004 are arranged to be adjacent to each other and close to the partition plate 131 located above, so that the cooling medium introduced from the oil-entering port 1001 can pass through the flow area 1002 located at the left side
counterclockwise, and then the cooling medium can pass through the flow area 1002 located at the right side clockwise, until it is discharged from the oil-exiting port 1004, thus enabling all of the iron core windings 120 to be soaked by the cooling medium and ensuring the cooling capacity.

As shown in FIG. 12, FIG. 14, FIG. 16 and FIG. 17, the inner annular flow channel 112a includes a flow channel groove 1003a. An outer ring of the inner annular reversing channel assembly 112 is recessed to form the flow channel groove 1003a, and the inner peripheral plate 113 is provided with an oil injection hole 1005 corresponding to the flow channel groove 1003a. By opening the flow channel groove 1003a on the outer ring of the inner annular reversing flow channel assembly 112, and then splicing the inner peripheral plate 113 on the outer ring of the inner annular reversing flow channel assembly 112, an inner annular flow channel 112a is formed between the flow channel groove 1003a and the inner peripheral plate 113, which reduces the machining difficulty and ensures the stability and reliability of the structure.

With reference to FIG. 11, FIG. 14 and FIG. 16, the outer ring of the inner annular reversing flow channel assembly 112 is further provided with a boss 112a. The boss 112a is arranged along the circumferential direction with the flow channel groove 1003a, and abuts against the inner ring of the inner peripheral plate 113. By providing the boss 112a, the inner annular flow channel 112a is prevented from forming an continuous annular structure which is communicated from end to end, thereby stopping the cooling medium from circulating in a loop in the inner annular flow channel 112a, that is, stopping the cooling medium flowing out from the left flow area 1002 from continuously flowing back to the left flow channel area 1002, and thus the cooling medium can be ensured to circulate through multiple flow areas 1002.

Specifically, the boss 112a is arranged upward between the oil-entering port 1001 and the oil-exiting port 1004, and the boss 112a is adjacent to and opposite to the barrier member 130 located on the upper side. In this way, the inner annular flow channel 112a can cover two flow areas 1002 evenly, that is, the inner annular flow channel 112a can be symmetrical along the barrier member 130, so that the cooling medium can uniformly flow between the inner annular flow channel 112a and the flow area 1002.

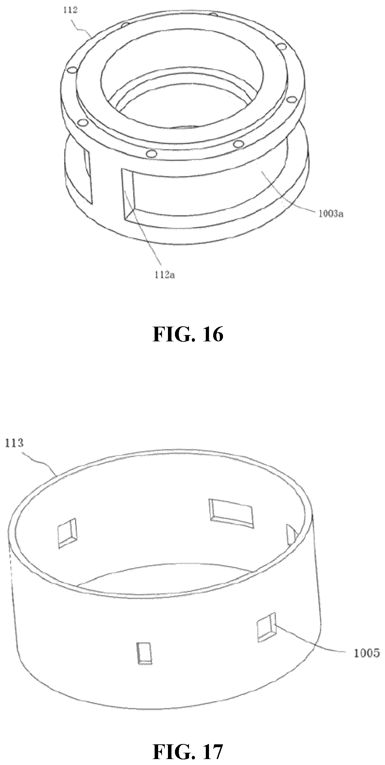

As shown in FIG. 11 and FIG. 17, the inner peripheral plate 113 is provided with the oil injection holes 1005 communicating with different flow areas 1002. The oil injection holes 1005 may be square or circular in shape. By adjusting the number, position and size of the oil injection holes 1005, the flow rate can be adjusted, so as to achieve the required flow rate and cooling effect. It can be seen that the shape and size of each of the oil injection holes 1005 may be different. With reference to FIG. 11, the oil injection holes 1005 and the inter-winding flow channel 1002b are arranged in a staggered manner, so as to avoid that the cooling medium does not completely cover the winding inner ring flow channel 1002c due to their opposition.

As shown in FIG. 12 to FIG. 14, the housing 110 further includes: two bottom plates 114, which are respectively connected between the inner annular reversing flow channel assembly 112 and the outer peripheral plate 111, and the inner peripheral plate 113 and the axial ends of the iron core winding 120 are respectively connected between the two bottom plates 114.

Specifically, the outer ring of the inner annular reversing flow channel assembly 112 and the inner ring of the outer peripheral plate 111 are respectively provided with steps 115, and the two bottom plates 114 are respectively abutted and fixed on the steps 115 of the inner annular reversing flow channel assembly 112 and the outer peripheral plate 111 for pre-fixing, and then can be fixed by bolts. For example, the bottom plate 114 is provided with a bottom plate mounting hole 114b, and the step 115 is provided with a step mounting hole 115a. When the bottom plate 114 abuts against the steps 115 of the inner annular reversing flow channel assembly 112 and the outer peripheral plate 111 respectively, the bottom plate mounting hole 114b is opposite to the step mounting hole 115a, and finally the bolts pass through the bottom plate mounting hole 114b and screwed to the step mounting hole 115a.

The bottom plate 114 is provided with multiple positioning grooves 114a, and the positioning grooves 114a on the two bottom plates 114 are in one-to-one correspondence. The stator core 121 is inserted into the positioning grooves 114a corresponding to the two bottom plates 114, and the coil 122 mounted outside the outer ring of the stator core 121 is located between the two bottom plates 114. The positioning groove 114a and the stator core 121 are fitted with each other in trapezoidal shape, and the stator core 121 may be strengthened and fixed in the positioning groove 114a by glue to ensure the bonding strength, thereby improving the stability of the structure. Moreover, through the positioning groove 114a, the iron core winding 120 may be positioned and mounted on the bottom plate 114, so as to improve the mounting efficiency and ensure the mounting position.

The inner peripheral plate 113 may be fixed to the two bottom plates 114 by glue.

The bottom plate 114 is made of nonmetallic material and has the characteristics of high strength, non-magnetic conductivity and non-conductivity, aiming to reduce eddy current caused by magnetic field penetration and to provide high-strength support. Additionally, the bottom plate 114 is relatively thin, which ensures that at least one axial end of the iron core winding 120 may be fitted with the rotor air gap respectively. This allows for assembly into configurations such as a single-stator and dual-rotor or a multi-stator and multi-rotor cascade axial flux motor.

As shown in FIG. 13 and FIG. 14, the two bottom plates 114 are mounted outside the inner annular reversing flow channel assembly 112 and abut on the step 115 of the outer ring of the bottom plate 114. At this time, the two bottom plates 114 are approximately flush with the axial ends of the inner annular reversing flow channel assembly 112 respectively, and one of the bottom plates 114 is embedded in the outer peripheral plate 111. A deceleration structure may be mounted on a side of the bottom plate 114 away from the core winding 120, and the deceleration structure may be partially or completely embedded in an area surrounded by the outer peripheral plate 111, so that the space is reasonably utilized, and the advantages of compact overall structure and small volume are ensured. At the same time, the cooling medium can be used to cool the bearing and the deceleration structure.

The method for assembling the stator cooling structure 100 is as follows:
mounting the inner annular reversing flow channel assembly 112, the outer peripheral plate 111, the inner peripheral plate 113, the iron core winding 120 and the barrier member 130 on the bottom plate 114 as shown in FIG. 11 or FIG. 15, and then sealing the other bottom plate 114 on the other side of the inner annular reversing flow channel assembly 112 and the outer peripheral plate 111, which make
the assembly both convenient and efficient.

In summary, the inner annular flow channel 112a is arranged radially inside the flow area 1002, and several oil injection holes 1005 are arranged between the inner annular flow channel 112a and the flow area 1002 and spaced apart in the circumferential direction, so that the cooling medium can uniformly flow between the flow area 1002 and the inner annular flow channel 112a, and the iron core winding 120 in the flow area 1002 can be completely soaked by the cooling medium, thereby improving the cooling capacity. Compared with the way of opening the channel in the bottom plate and introducing the cooling water, the way of soaking the iron core winding 120 with the cooling medium can greatly lower the temperature of the stator core 121 and the coil 122 that form the iron core winding 120, so as to ensure the good operation and reliability of the motor, and also improve the operating efficiency and peak power of the motor. The inner annular reversing flow channel assembly 112 can be spliced with the inner ring of the inner peripheral plate 113 to form the inner annular flow channel 112a, and the two can be bonded and fixed by glue, thus improving the molding efficiency and reducing the processing difficulty.

### Third embodiment

An axial flux motor is further provided according to the present application, which includes at least one of the axial flux motor stator cooling structure 100 of the first embodiment or the second embodiment. The axial flux motor further includes at least one rotor, where the rotor is arranged on at least one side of the stator cooling structure 100 in the axial direction, and an air gap is arranged between the stator cooling structure 100 and the rotor.

As the axial flux motor adopts the stator cooling structure 100 according to the above embodiment, the beneficial effects of the axial flux motor can refer to the stator cooling structure 100.

Based on the number of the rotors and the stators, the axial flux motor may be categorized into a single-stator and dual-rotor axial flux motor or a multi-stator and dual-rotor axial flux motor. The stator cooling structure 100 is held between the two rotors in the single-stator and dual-rotor axial flux motor.

The axial flux motor further includes at least one bearing and a rotating shaft, where the rotating shaft passes through the inner annular reversing flow channel assembly 112 of the stator cooling structure 100, and the bearing is arranged between the rotating shaft and the inner annular reversing flow channel assembly 112, and the rotor is fixed on the rotating shaft.

The above-mentioned embodiments are only used to illustrate the technical ideas and characteristics of the present application, and their purpose is to enable the skilled in the art to understand the contents of the present application and implement it accordingly. It is not possible to limit the patent application scope of the present application only by this embodiment. That is, all equivalent changes or modifications made according to the spirit disclosed in the present application still fall within the patent scope of the present application.

## Claims

1. An axial flux motor stator cooling structure (100), comprising:
a housing (110) having an annular accommodating cavity (1101) and a bushing hole (1102);
a plurality of iron core windings (120), wherein the plurality of iron core windings (120) are mounted in the annular accommodating cavity (1101) and form at least two flow areas (1002) together with the housing (110); and
an inner annular reversing flow channel assembly (112), wherein the inner annular reversing flow channel assembly (112) is mounted in the bushing hole (1102) and comprises at least one inner annular flow channel (112a), which communicates two different flow areas (1002).

2. The axial flux motor stator cooling structure (100) according to claim 1, wherein the flow area (1002) comprises a winding outer ring flow channel (1002a), a winding inner ring flow channel (1002c) and a plurality of inter-winding flow channels (1002b), the winding inner ring flow channel (1002c) and the winding outer ring flow channel (1002a) are arranged radially from inside to outside, the plurality of inter-winding flow channels (1002b) are spaced apart in the circumferential direction, and each of the inter-winding flow channels (1002b) is communicated between the winding inner ring flow channel (1002c) and the winding outer ring flow channel (1002a), and flow directions of the liquid in the inter-winding flow channel (1002b) in the two flow areas (1002) communicated with the inner annular flow channel (112a) are opposite to each other.

3. The axial flux motor stator cooling structure (100) according to claim 1, wherein there are three flow areas (1002), namely, an oil-entering flow area (1002a), an intermediate flow area (1002b) and an oil-exiting flow area (1002c), wherein the oil-entering flow area (1002a), the intermediate flow area (1002b) and the oil-exiting flow area (1002c) are spaced apart in the circumferential direction; and
there are two inner annular flow channels (112a), namely, an oil-entering flow channel (1003) and an oil-exiting flow channel (1004), wherein the oil-entering flow channel (1003) is communicated between the oil-entering flow area (1002a) and the intermediate flow area (1002b), the oil-exiting flow channel (1004) is communicated between the intermediate flow area (1002b) and the oil-exiting flow area (1002c), and a part where the oil-entering flow channel (1003) communicates with the intermediate flow area (1002b) is staggered from a part where the oil-exiting flow channel (1004) communicates with the intermediate flow area (1002b) in the circumferential direction.

4. The axial flux motor stator cooling structure (100) according to claim 3, wherein the oil-entering flow channel (1003) comprises an oil-entering inlet (1003a), an oil-entering outlet (1003b), and an oil-entering channel (1003c) extending between the oil-entering inlet (1003a) and the oil-entering outlet (1003b), wherein the oil-entering inlet (1003a) is communicated with the oil-entering flow area (1002a), the oil-entering inlet (1003a) and the oil-entering port (1001) are staggered from each other in the circumferential direction, and the oil-entering outlet (1003b) is communicated with the intermediate flow area (1002b); and
the oil-exiting flow channel (1004) comprises an oil-exiting inlet (1004a), an oil-exiting outlet (1004b) and an oil-exiting channel (1004c) extending between the oil-exiting inlet (1004a) and the oil-exiting outlet (1004b), wherein the oil-exiting inlet (1004a) communicates with the intermediate flow area (1002), the oil-exiting inlet (1004a) and the oil-entering outlet (1003b) are staggered from each other in the circumferential direction, the oil-exiting outlet (1004b) is communicated with the oil-exiting flow area (1002c), and the oil-exiting outlet (1004b) and the oil-exiting port (1005) are staggered from each other in the circumferential direction.

5. The axial flux motor stator cooling structure (100) according to claim 4, wherein the oil-entering channel (1003c) and the oil-exiting channel (1004c) are spaced apart along the axial direction,
the oil-entering inlet (1003a), the oil-exiting outlet (1004b), the oil-entering outlet (1003b) and the oil-exiting inlet (1004a) are sequentially spaced apart along a counterclockwise direction,
the oil-entering channel (1003c) is communicated between the oil-entering inlet (1003a) and the oil-entering outlet (1003b) in a clockwise direction, and
the oil-exiting channel (1004c) is communicated between the oil-exiting inlet (1004a) and the oil-exiting outlet (1004b) in a counterclockwise direction.

6. The axial flux motor stator cooling structure (100) according to claim 2, wherein
the housing (110) comprises an outer peripheral plate (111) and an inner peripheral plate (113), and an annular accommodating cavity (1101) is formed between the inner peripheral plate (113) and the outer peripheral plate (111); and
a plurality of iron core windings (120) are arranged between the outer peripheral plate (111) and the inner peripheral plate (113) and spaced apart in the circumferential direction, a winding outer ring flow channel (120a) is formed between the iron core windings (120) and the outer peripheral plate (111), a winding inner ring flow channel (120c) is formed between the iron core windings (120) and the inner peripheral plate (113), an inter-winding flow channel (120b) is formed between two adjacent iron core windings (120), and each inter-winding flow channel (120b) is communicated between the winding inner ring flow channel (120c) and the winding outer ring flow channel (120a).

7. The axial flux motor stator cooling structure (100) according to claim 6, wherein the inner annular reversing flow channel assembly (112) is connected to the inner ring of the inner peripheral plate (113), and the inner annular flow channel (112a) is formed between the inner annular reversing flow channel assembly (112) and the inner peripheral plate (113), and the inner peripheral plate (113) is provided with oil injection holes (1005), which communicate the inner annular flow channel (112a) and the flow area (1002).

8. The axial flux motor stator cooling structure (100) according to claim 6, wherein
two adjacent flow areas (1002) are separated from each other by a barrier member (130), and the barrier member (130) comprises at least one of:
a first barrier member (132), which is inserted between two adjacent iron core windings (120) and is sandwiched between the outer peripheral plate (111) and the inner peripheral plate (113);
a partition plate (131), wherein the inner peripheral plate (113) and the outer peripheral plate (111) each is connected with one partition plate (131), and the iron core winding (120) is sandwiched between two partition plates (131); and
a flow-guiding member (150) connected between the inner peripheral plate (113) and the iron core winding (120) to form an opening between the iron core winding (120) and the outer peripheral plate (111).

9. The axial flux motor stator cooling structure (100) according to claim 6, wherein the housing (110) further comprises:
two bottom plates (114), wherein the two bottom plates (114) are respectively connected between the inner annular reversing flow channel assembly (112) and the outer peripheral plate (111), and the inner peripheral plate (113) and the axial ends of the iron core winding (120) are respectively connected between the two bottom plates (114).

10. The axial flux motor stator cooling structure (100) according to claim 9, wherein the bottom plate (114) is provided with a plurality of positioning grooves (114a), and the positioning grooves (114a) on the two bottom plates (114) are in one-to-one correspondence, and the iron cores (121) are inserted into the positioning grooves (114a) on the two bottom plates (114) correspondingly, and the coil (122) mounted outside the iron core (121) is located between the two bottom plates (114).

11. The axial flux motor stator cooling structure (100) according to claim 9, wherein the outer ring of the inner annular reversing flow channel assembly (112) and the inner ring of the outer peripheral plate (111) are respectively provided with steps (115), and the two bottom plates (114) respectively abut and are fixed to the steps (115) of the inner annular reversing flow channel assembly (112) and the outer peripheral plate (111).

12. An axial flux motor, comprising the axial flux motor stator cooling structure (100) according to any one of claims 1 to 11, and further comprising at least one rotor, wherein the rotor is arranged on at least one side of the stator cooling structure (100) in an axial direction, and an air gap is provided between the stator cooling structure (100) and the rotor.
